Europäisches Patentamt

European Patent Office

Office européen des brevets

(11) Publication number: **0 225 151**
**A2**

# (12) EUROPEAN PATENT APPLICATION

(21) Application number: **86309173.2**

(22) Date of filing: **25.11.86**

(51) Int. Cl.4: **G 06 K 9/46**

(30) Priority: **26.11.85 JP 263957/85**

(43) Date of publication of application:
**10.06.87 Bulletin 87/24**

(84) Designated Contracting States: **DE FR GB**

(71) Applicant: **International Business Machines Corporation
Old Orchard Road
Armonk, N.Y. 10504 (US)**

(72) Inventor: **Itoh, Shoji
Minami-Meguro-en 461 4-6-16, Kami-Ohsaki
Shinagawa-Ku Tokyo (JP)**

**Suzuki, HideoöAbitaiijima 305
2-17-17 UtsukushigaokaöMidori-Ku
Yokohama-shiöKanagawa-Ken (JP)**

(74) Representative: **Atchley, Martin John Waldegrave
IBM United Kingdom Limited Intellectual Property
Department Hursley Park
Winchester Hampshire SO21 2JN (GB)**

(54) Pattern recognition system.

(57) The present invention relates to a pattern recognition system for recognising circular and linear patterns, in a complex image including such circular and linear patterns, of the type which comprise a feature detection system for detecting features and feature values in the image, scanning means for scanning the feature detection system over the image, and detecting means for detecting the circular and linear patterns based on feature values detected by the feature detection system.

According to the invention the pattern recognisation system is characterised in that the feature detection system comprises a directional multiple circular window filter including means for enhancing one or more selected directional components of features detected by the filter.

EP 0 225 151 A2

**Description**

PATTERN RECOGNITION SYSTEM

The present invention generally relates to a pattern recognition system for recognising circular and linear patterns separately in a complex image including circular and linear patterns mixed together.

A typical image including circular and linear components is a chest radiograph. Heretofore, there have been proposed several types of apparatus for detecting circular patterns regarded as abnormal shadows and linear patterns regarded as shadows of blood vessels from a chest radiograph. For detecting circular patterns, such apparatus has included a weighted linear filter responsive to space frequencies and a circle detector responsive to circular patterns. The weighted linear filter has been designed to be able to cope with the changes in the concentration in the horizontal direction of an image to avoid the effect of the breastbones. In other words, the filter is characterised by responding to the space frequencies in the horizontal direction. The circle detector extracts an image of feature values by the Hough transformation and thereafter extracts candidates for circular patterns by employing a predetermined threshold. At that time, smoothing is performed.

For detecting linear patterns, pulmonary angiography is also a well known method. A differential filter has also been employed for extracting shadows of blood vessels from an ordinary radiograph by a digital processing.

The above-mentioned linear filter has a problem in establishing a threshold because the number of candidates for linear patterns varies considerably as a result of a subtle change in the threshold. Further, the shadows of lung cancers, which are featured by the concentration distribution rather than by the space frequencies, are not well adapted to be recognised by such a linear filter which is responsive to space frequencies. The above-mentioned circle detector responds to shadows having circular shapes with relatively clear boundaries. Therefore, it can well detect vertical components in the shadows of tuberculous tumours, benign tumours, blood vessels, and so on, but is restricted in detecting the shadows of lung cancers which have obscure peripheries. Further, it also has the disadvantage that the number of candidates largely changes according to thresholding.

The above-mentioned differential filter can extract the shadows of thick blood vessels near the hilum of the lung to some extent, but cannot detect at high accuracy those of thin blood vessels at the peripheral lung field.

The object of the present invention to provide an improved pattern recognition system for recognising circular and linear patterns in a complex image including such circular and linear patterns.

The present invention relates to a pattern recognition system for recognising circular and linear patterns, in a complex image including such circular and linear patterns, of the type which comprises a feature detection system for detecting features and feature values in the image, scanning means for scanning the feature detection system over the image, and detecting means for detecting the circular and linear patterns based on feature values detected by the feature detection system.

According to the invention the pattern recognisation system is characterised in that the feature detection system comprises a directional multiple circular window filter including means for enhancing one or more selected directional components of features detected by the filter.

In order that the invention may be more readily understood, an embodiment will now be described with reference to the accompanying drawings, in which:

Figure 1 is a block diagram illustrating a pattern recognition system according to the present invention,

Figure 2 is a schematic diagram illustrating a filter used in the system of Figure 1 for detecting lung cancer candidates,

Figure 3 is a schematic diagram illustrating a filter used in the system of Figure 1 for detecting blood vessels,

Figure 4 is a block diagram illustrating an example of a circuit structure of a feature value calculator utilised in the system of Figure 1,

Figure 5 shows a schematic diagram illustrating the extraction of temporary boundary positions using the system of Figure 1 and,

Figure 6 shows a block diagram illustrating the area of a lung cancer candidate detected using the system of Figure 1.

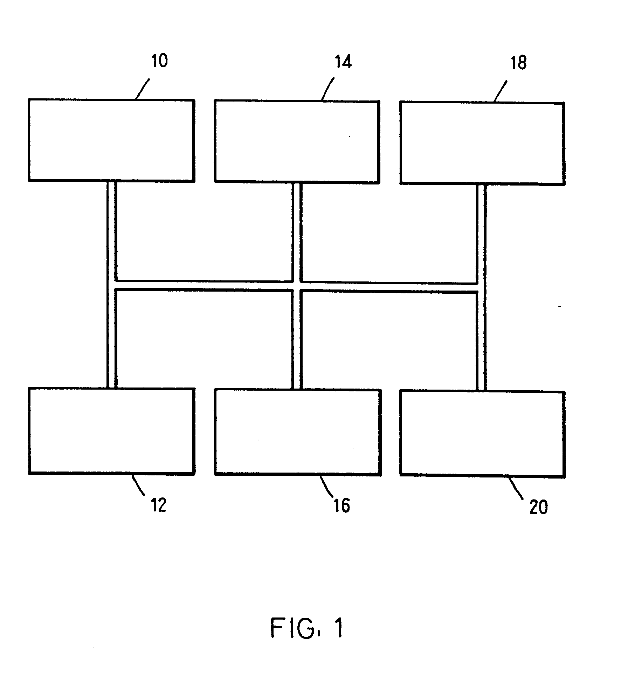

Figure 1 illustrates an embodiment of the present invention applied to a chest radiograph processing system. A pattern recognition system includes an image input device 10 such as an image scanner which scans a chest radiograph and produces a quantised image with the resolution of 1mm, for example. Each picture element (pixel) of the quantised image has eight bits (256 levels). The quantised image produced by the image input device 10 is stored in a storage device 12 for the calculation of feature values and the detection of shadows. A feature value calculator 14 calculates the feature values for detecting candidates for lung cancers (circular components) or blood vessels (linear components) by scanning the quantised image with a multiple circular window filter to be described later. A shadow detector 16 detects the shadows of the lung cancer candidates or blood vessels based on the calculated feature values. The detected results can be displayed on a display device 18. A controller 20 controls the entire process from the input of the image to the display of the detected results.

The feature value calculator 14 constitutes an essential part of the pattern recognition system. The

2

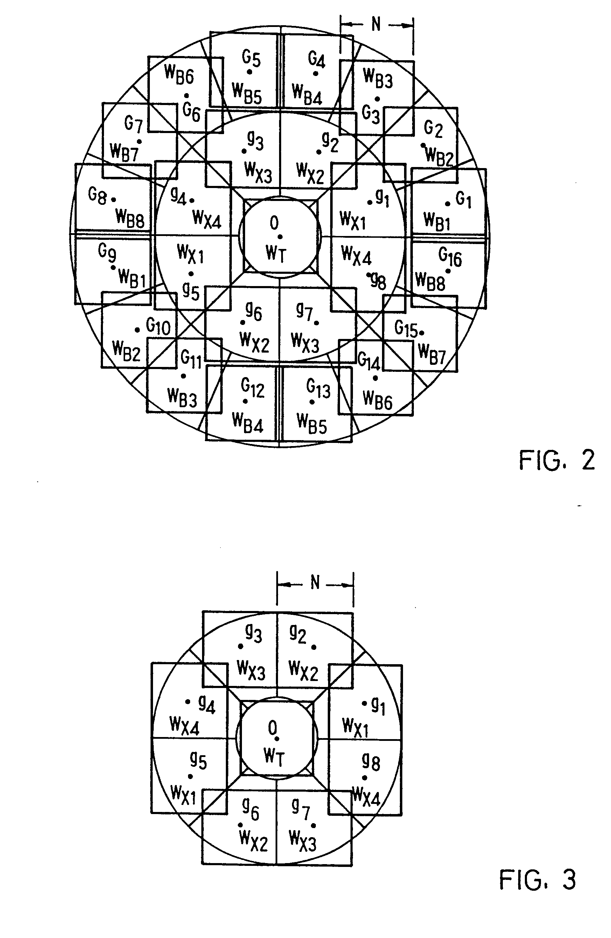

structures of the filters for calculating the feature values are slightly different between that used for detecting lung cancer candidates and that used for detecting blood vessels, as illustrated by Figs. 2 and 3, respectively. Figure 2 illustrates a triple circular window filter, for detecting lung cancer candidates, which comprises three concentric circles, and Figure 3 illustrates a double circular window filter, for detecting blood vessels, which comprises two concentric circles.

As illustrated in Figure 2, the filter is based on three concentric circles whose radii are r, 3r, and 5r, respectively. The value of r varies according to the sizes of the lung cancer candidates desired to be detected. If those which cannot be clearly identified by the naked eye (e.g. those having a diameter of approximately 1 cm each) are mainly desired to be detected, the value of r may be established to 3 mm, for example. As illustrated in Figure 2, the innermost circle defines one segment, while the first annular region encircled by the middle circle and the innermost circle is equally divided into eight segments, and the second annular region encircled by the outermost circle and the middle circle is equally divided into sixteen segments. The symbols $W_T$, $W_{Xi}$ (i = 1, 2, 3, and 4) and $W_{Bj}$ (j = 1, 2, ..., and 8) located within the individual segments represent the average concentration values of the pixels located within each of the segments. As seen from the Figure 2, each of the segments is paired with another segment located symmetrically about a line drawn vertically in the Figure and passing through the centre of the innermost circle, thereby rendering the filter directional. This is similar in case of the filter illustrated in Figure 3.

The feature value calculator 14 calculates the following feature value S for each pixel by scanning the quantised image with the filter illustrated in Figure 2.

1. In case of $W_T \geqq \text{Max } W_X \geqq \text{Max } W_B$ :

$$S = \frac{W_T}{\text{Max } W_B} - 1 \qquad \cdots\cdots\cdots\cdots \quad (1)$$

where Max $W_X$ and Max $W_B$ represent the maximum values of $W_{Xi}$ and $W_{Bj}$, respectively.

2. In the other cases :

$S = 0$

A filter which will implement the above expression is characterised as follows. First, as to concentrations, the filter responds to a pattern in which the concentration of image portions is higher in its centre than in its periphery, thereby excluding the other patterns. As to shapes, the filter can exclude patterns with long and narrow shapes crossing the centre of the filter, since the maximum value of $W_{Bj}$ is employed as the denominator on the right-hand side of the above expression (1). This is equivalent to weakening the maximum directional component and, in other words, enhancing the other directional components. Further, as to sizes, the triple circular structure of the filter permits the selection of the sizes of patterns to be detected. For example, when r = 3 mm, the filter can detect patterns of approximately 1 to 3 cm in diameter.

In calculating the average concentration values of the individual segments in order to calculate the feature values, a circular window which would include pie-shaped segments would make the calculation quite complicated. Therefore, in the embodiment being described, the individual segments are approximated with rectangular blocks with the same size. With the length N of a side of a rectangular block and the original point O at the centre of the filter, the polar coordinates of the centre positions of the individual blocks $g_n$ (n = 1, 2, ..., and 8) and $G_m$ (m = 1, 2, ..., and 16) are expressed as follows:

$N \sim \Pi^{1/2} \cdot r / a$

$g_n = ( 5^{1/2} \cdot r , (2n - 1) \Pi / 8 )$

$G_m = ( 17^{1/2} \cdot r , (2m - 1) \Pi /16 )$

Since the length N of a side of the rectangular block is represented in the units of a pixel, an integer which is nearest to $\Pi^{1/2} \cdot r / a$ is selected as the value of N. The value "a" denotes the length of a side of a pixel. In the embodiment being described, since a = 1mm and r = 3mm, the result of calculation of the above expression for N is 5.31736..., and accordingly N = 5. This means that each rectangular block includes a partial image of 5 × 5 pixels (25 pixels). In the example of Figure 2, the filter is formed by 25 rectangular blocks. Although the concentrations of the pixels in the overlapping areas of the blocks would be calculated duplicately, experiments have revealed that such overlapping does not affect the accuracy the detection.

When the quantised image is scanned with the filter of Figure 2, the scanning is performed by registering the centre of the filter with the respective pixels. While the centre positions of the individual blocks forming the filter are represented by their polar coordinates in the above example, their x-y coordinates are actually calculated. With the position of the centre of the filter (pixel position) having been decided, the x-y coordinates can easily be calculated. If the calculated position of a block and the pixel position on the image do not coincide with each other, the position of the pixel which is nearest to the calculated position among the four pixels surrounding it is adopted as the centre position of the block. Thus, the 25 pixels included in each individual block are uniquely selected, and the average concentration values of the individual blocks can be obtained. The time required for calculating the feature values S could be reduced by calculating beforehand the average concentration values of the individual blocks centered at the respective pixels and storing the values in the storage device using the addresses corresponding to the centre positions, i.e. the pixel positions.

Since the average concentration values of the individual blocks and the values $W_{Xi}$ and $W_{Bj}$ which are used in calculating the feature values S are not always coincident, it is necessary to calculate the values $W_{Xi}$ and $W_{Bj}$ based on the average concentration values of the individual blocks in calculating the feature values S. This will be explained later.

The radii of the two concentric circles forming the basis of the filter for detecting blood vessels illustrated by Figure 3 are $r'$ and $3r'$, respectively. In order to accomplish precise detection of the shadows of blood vessels of various sizes included in chest radiographs, only one type of filter is not sufficient. Therefore, in the embodiment described, two filters, with respective radii $r'$ of 1.5mm and 3mm, are used. The meanings of the symbols shown in Figure 3 and the formation of the filter using rectangular blocks are similar to those used in the filter of Figure 2. The value of N is 3 when $r' = 1.5$mm, and is 5 as in the previous example when $r' = 3$mm. When $N = 5$, the average concentration values $W_T$ and $W_{Xi}(i = 1, 2, 3, \text{ and } 4)$ of the individual blocks are the same as in the case of the filter of Figure 2. When $N = 3$, since the number of the pixels in each block is 9, it is necessary to calculate again the average concentration values. The results of the calculations are stored in the storage device 12.

The feature value $S'$ is calculated for each pixel according to the following expression:

$$S' = \frac{W_T}{\left(\sum_{i=1}^{4} W_{Xi} - \text{Max } W_X\right) / 3} - 1 \quad \ldots\ldots (2)$$

The filter of Figure 3 is also directional, and, as understood from the above expression, the maximum directional component crossing the centre of the filter is enhanced. On the other hand, in the case of the filter of Figure 2, the directional components other than the maximum directional component are enhanced.

When the filters of Figures 2 and 3 are used for scanning images, there would be a question as to how to treat the edges of the images. In the embodiment described, only the portions of the filters overlapping the images are taken into consideration, ignoring the rest.

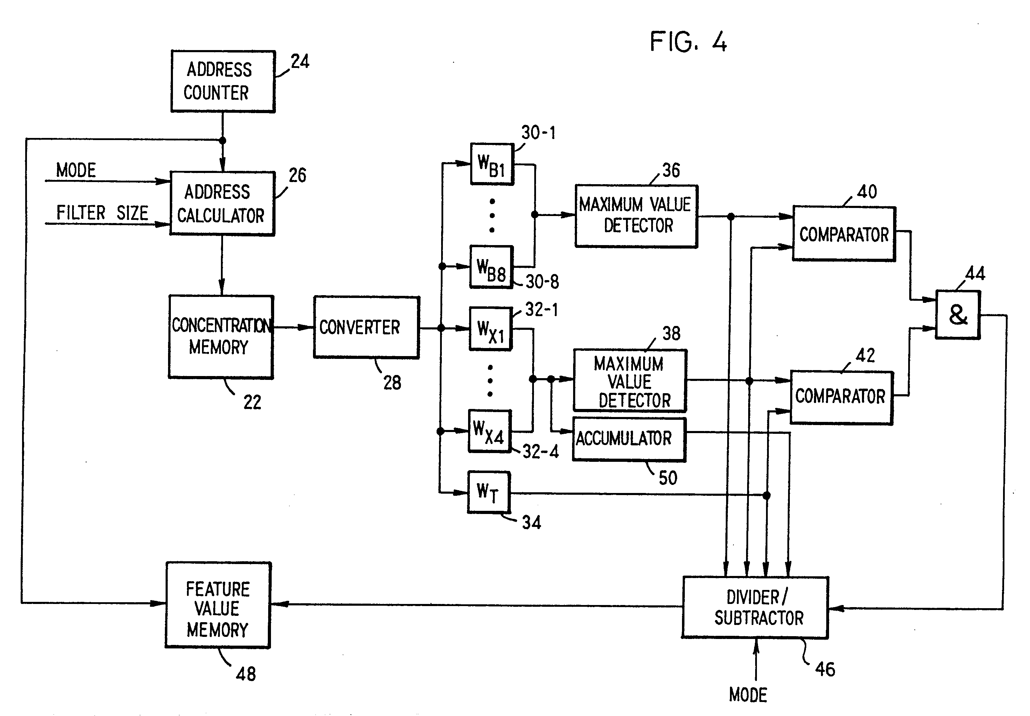

Figure 4 illustrates an example of the circuit structure of the feature value calculator 14. In this example, it is assumed that the average concentration values of the of the individual rectangular blocks forming the filters of Figure 2 and Figure 3 have already been calculated and stored in a concentration memory 22 by the controller 20 for the respective pixel positions of the quantised image. The addresses of the concentration memory 22 correspond to the pixel positions $(0,0), (0,1), (0,2), ...,$ and $(M,N)$. For a resolution of 1mm, it is desired that M and N are both of the order of 300 in the case of an ordinary chest radiograph. An address counter 24 is sequentially up-dated (from 0 to MN - 1, i.e. 89999) corresponding to the position of the centre of the filter which is registered sequentially with the respective pixels of the quantised image. An address calculator 26 calculates the concentration memory addresses which represent the centre positions of the individual rectangular blocks, and then transfers the addresses sequentially to the concentration memory 22. The address counter values and also mode signals and filter size signals are supplied to the address calculator 26. The mode signals indicate which should be detected, lung cancer candidates or blood vessels. The filter size signals are effective only in the blood vessel detecting mode, and indicate which of the two filters should be used. The address calculator 26 calculates the addresses corresponding to the centre positions O, $g_1$ - $g_8$, and $G_1$ - $G_{16}$ of the individual blocks forming the filter of Figure 2 in the lung cancer candidate detecting mode, and calculates only the addresses corresponding to the centre positions O, and $g_1$ - $g_8$ of the individual blocks forming the filter of Figure 3 in the blood vessel detecting mode.

These addresses are transferred to the concentration memory 22 in a predetermined sequence. As an example, the case of Figure 2 will now be explained. In the filter of Figure 2, each of the blocks, besides the central one, is paired with another one located symmetrically about a line through the centre of the innermost circle as described above, and the average of the average concentration values for each pair of the blocks should be calculated. Therefore, the address calculator 26 transfers sequentially the addresses of the centre positions of the paired blocks to the concentration memory 22. For example, the addresses are transferred in the sequence of $g_1$, $g_5$, $g_2$, $g_6$, and so on. The average concentration values for the paired blocks are sequentially transferred from the concentration memory 22 to a converter 28. Then, the converter 28 averages the average concentration values for each pair of the blocks and stores the averages into the corresponding register 30 - i ($i = 1, 2, ..., 8$) or 32 - j ($j = 1, 2, 3, \text{ and } 4$). The average concentration value for the block corresponding to the original point O of the filter is stored into a register 34 without any conversion. The subsequent stages will be explained below as to each detecting mode.

## Lung Cancer Candidate Detecting Mode

In this mode, all of the registers 30 - i, 32 - j, and 34 are loaded. To examine the conditions for calculating the feature values S, the contents of the registers 30 - i are transferred to a maximum value detector 36, and the contents of the registers 32 - j are transferred to another maximum value detector 38. These maximum value detectors 36 and 38 detect the maximum value of $W_{Bj}$, namely Max $W_B$, and the maximum value of $W_{Xi}$, namely Max $W_X$, respectively, by comparing the contents of the individual registers. The values Max $W_B$ and Max $W_X$ are transferred to a comparator 40. The comparator 40 has its output activated when Max $W_X \geq$ Max $W_B$. Another comparator 42 receives Max $W_X$ and the content of the register 34, namely $W_T$, and has its output activated, when $W_T \geq$ Max $W_X$. When both of the outputs of the comparators 40 and 42 are activated, the condition for calculating the expression (1) is satisfied, an AND gate 44 is conditioned and a divider/subtractor 46 is enabled to calculate the expression (1).

The divider/subtractor 46 receives Max $W_B$ from the maximum value detector 36 and $W_T$ from the register 34 to calculate the expression (1). The divider/subtractor 46 calculates the expression (1) in response to the conditioning of the AND gate 44 when the mode signal is designating the lung cancer candidate detecting mode, and transfers the output to a feature value memory 48. When the AND gate 44 is not conditioned, the divider/subtractor 46 would transfer an output of zero thereto. The feature value memory 48 stores the output value of the divider/subtractor 46 into the position designated by the address counter 24.

The above described operation is repeated every time the position of the centre of the filter is changed, until the operation for the final pixel is completed. This is the same in the case of the blood vessel detecting mode to be described below.

## Blood Vessel Detecting Mode

In this mode, the registers 30 - i, the maximum value detector 36, the comparators 40 and 42, and the AND gate 44 are not employed. The average concentration values read out from the concentration memory 22 every time the filter is moved are converted by the converter 28 as stated before and stored sequentially into the registers 32 - j. The register 34 stores the average concentration value unconverted. The maximum value detector 38 detects the maximum value of $W_{Xi}$, namely Max $W_X$, as stated before, and transfers it to the divider/subtractor 46.

In the blood vessel detecting mode, an accumulator 50 is further employed. The accumulator 50 accumulates sequentially the contents of the registers 32 - i, and ultimately outputs the sum $\Sigma W_{Xi}$. The divider/subtractor 46 receives Max $W_X$ and $\Sigma W_{Xi}$, calculates the expression (2) in response to the mode signal designating the blood vessel detecting mode, and transfers the result to the feature value memory 48. The feature value memory 48 stores it in the position designated by the address counter 24.

The above described operation is repeated for the two types of filters for detecting blood vessels.

While in the example of Figure 4 the concentration memory 22 and the feature value memory 48 are provided separately, selected areas of the storage device 12 may be used for such memories. It is preferred that the individual memories have the areas corresponding to the respective filters.

Upon the completion of the calculation of the feature values, the shadow detector 16 is activated by the controller 20 to detect the shadows of lung cancer candidates and blood vessels. In detecting a lung cancer candidate, the shadow detector 16 searches the maximum feature value among the calculated feature values, and establishes the area of the lung cancer candidate centred at the position corresponding to the maximum feature value by a special method to be described later. This operation is repeated a predetermined number of times. In detecting blood vessels, it is only needed to binary-digitise the calculated feature values by thresholding.

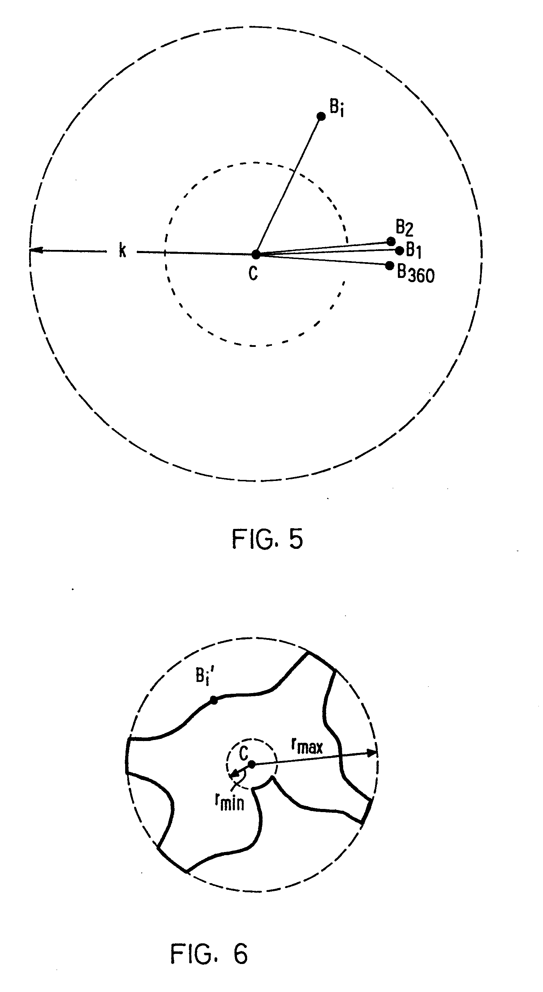

First, the operation of the shadow detector 16 in the case of detecting a lung cancer candidate will be described. The shadow detector 16 searches the maximum feature value (the highest peak in the map of the feature values), then establishes a circular area with a predetermined radius k (e.g. 2cm) centred at the pixel position C corresponding to the searched maximum feature value in the quantised image, as shown in Figure 5, and calculates the amounts of the gradients in the concentrations within the area in different directions. Then, the position where the amount of the gradient is the maximum within the area is established as a temporary boundary position $B_i$, and such boundary positions are established at intervals of one degree all through 360 degrees.

Next, the maximum radius (threshold) $r_{max}$ from the centre position C is established such that the number of boundary positions $B_i$ located outside the radius would not exceed 10% of the whole, i.e. 36. The minimum radius $r_{min}$ is established as the size of the shadow of the minimum lung cancer (e.g. 4mm) intended to be detected. Any boundary positions $B_i$ located outside $r_{max}$ and $r_{min}$ are moved onto $r_{max}$ and $r_{min}$, respectively.

Finally, by connecting sequentially all the boundary positions $B_i$ established as stated above with each other, the area of the lung cancer candidate is determined. At this time, however, in order to avoid large variations of $B_i$, the average radius of $B_i$ is obtained by taking into consideration five each of the boundary positions before and after the each individual $B_i$, thereby to establish the true boundary positions $B'_i$.

Ultimately, the area of the lung cancer candidate as illustrated in Figure 6 is obtained. However, if more than a half of the area is located outside the lung area, such an area should be ignored. For detecting the lung area, there is a known technique employing a differential filter. Since such a detection is not directly related to the present invention, it is not detailed here. The above stated operation is repeated until the number of the areas of the lung cancer candidates has reached 10, for example.

Next, the operation of the shadow detector 16 in the case of detecting blood vessels will be described. The shadow detector 16 determines a threshold T from the calculated feature value S' according to the following expression:

$$T = \Sigma\, S'\, p\, /\, 2\, I$$

In the above expression, " $\Sigma\, S'\, p$ " denotes the sum of the feature values S' above zero, and "I" denotes the number of S' p. The shadow detector 16 binary digitises all the feature values S' by using the threshold T. As stated before, since two types of filters are used in detecting blood vessels, the binary digitisation must be performed twice. Finally, the shadow detector 16 combines the two binary images and eliminates the portion of the shadow located outside the lung area.

The controller 20 causes the display 18 to display individually or in combination the images including the shadows of the lung cancer candidates and the blood vessels detected by the shadow detector 16.

By employing the above described directional multiple circular window filters in the pattern recognition system and enhancing only the selected directional components in calculating the feature values, circular patterns and linear patterns can be recognised distinctively in a complicated image. Further, experiments have revealed that the processing time has been reduced to approximately 70% and 40% of those in case of the conventional circle detector and the linear filter, respectively.

## Claims

1. A pattern recognition system for recognising circular and linear patterns, in a complex image including such circular and linear patterns, comprising:

a feature detection system for detecting features and feature values (B) in said image, scanning means (10) for scanning said feature detection system over said image, and detecting means (10, 12, 14) for detecting said circular and linear patterns based on feature values detected by said feature detection system,

characterised in that

said feature detection system comprises a directional multiple circular window filter including means for enhancing one or more selected directional components of features detected by said filter.

2. A pattern recognition system as claimed in claim 1 characterised in that said directional multiple circular window filter uses a triple circular window filter for said circular patterns and enhances the directional components other than the maximum directional component of said features detected by said filter.

3. A pattern recognition system as claimed in claim 2, characterised in that said detection means searches for the maximum value of said feature values and detects a circular pattern within a predetermined area centred at the position corresponding to the position of said maximum feature value.

4. A pattern recognition system as claimed in claim 3, characterised in that said detection means is adapted to detect circular patterns which are shadows of candidates of lung cancers in a chest radiograph.

5. A pattern recognition system as claimed in claim 1 characterised in that said directional multiple circular window filter uses a double circular window filter for said linear patterns and enhances the maximum directional component of features detected by said filter.

6. A pattern recognition system as claimed in claim 5, characterised in that said detection means binary digitises said feature values with a predetermined threshold.

7. A pattern recognition system as claimed in claim 6, characterised in that said detection means is adapted to detect linear patterns which are shadows of blood vessels in a chest radiograph.

8. A pattern recognition system as claimed in claim 1, characterised in that said multiple circular window filter comprises at least two concentric circles, each annular region encircled by said concentric circles being equally divided into a plurality of segments, and the average concentration value of the picture elements located within each of said segments and the innermost circle being used as a feature to be detected.

0225151

FIG. 1

0225151

FIG. 2

FIG. 3

FIG. 4

FEATURE VALUE MEMORY 48

ADDRESS COUNTER 24

MODE
FILTER SIZE
ADDRESS CALCULATOR 26

CONCENTRATION MEMORY 22

CONVERTER 28

$W_{B1}$ 30-1
$W_{B8}$ 30-8
$W_{X1}$ 32-1
$W_{X4}$ 32-4
$W_T$ 34

MAXIMUM VALUE DETECTOR 36

MAXIMUM VALUE DETECTOR 38

ACCUMULATOR 50

COMPARATOR 40

COMPARATOR 42

& 44

DIVIDER/ SUBTRACTOR 46

MODE

0225151

FIG. 5

FIG. 6